# EUROPEAN PATENT APPLICATION

(11) **EP 1 762 166 A2**
(43) Date of publication of application: **14.03.2007**
(21) Application number: 06356029.6
(22) Date of filing: 16.03.2006
(51) Int. Cl.: A47L 9/28, A47L 5/22

(54) **Vacuum cleaner having a suction motor and means to decelerate rotation of the fan drive shaft**

(30) Priority: 09.09.2005 KR 20050084139
(71) Applicant: Samsung Gwangju Electronics Co., Ltd., Gwangju-city (KR)
(72) Inventor: Lee, Myung-Won, Gwangsan-gu, Gwangju-city (KR); You, Jae-sun, Gwangsan-gu, Gwangju-city (KR)
(74) Representative: Myon, Gérard Jean-Pierre

(57) **Abstract**

A vacuum cleaner includes: a main body; a suction brush configured to draw particulates into the main body; a motor (50) installed at the main body; and a decelerating unit (60) configured to connect a driving shaft (53) of the motor with an impeller (58) to transfer a rotation force of the driving shaft to the impeller and to set the rotation speed of the driving shaft lower than that of the impeller.

## Description

### BACKGROUND OF THE INVENTION

### Field of the Invention

The present invention relates to a vacuum cleaner with a brush motor. More particularly, the invention relates to a vacuum cleaner with a brush motor using a deceleration rate, which can produce improved suction force by stabilizing the motor by setting the rotation speed of the impeller higher than that of the motor and rotating an impeller at a high speed.

### Description of the Related Art

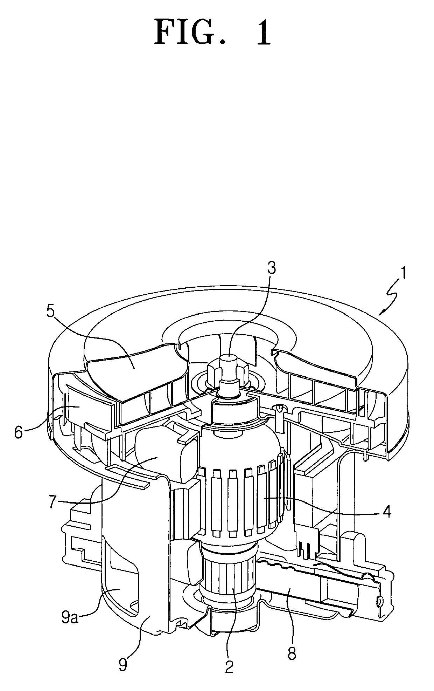

In general, a vacuum cleaner uses a brush motor to generate suction force. Referring to FIG. 1, the brush motor 1 generates rotation force in an armature 4 and rotates an impeller 5 connected to a driving shaft 3 to suck dirt and air when electrical power is applied to the vacuum cleaner.

Dirt and air are collected in the vacuum cleaner by the vacuum pressure created between a suction body (not shown) of the vacuum cleaner and a surface to be cleaned. The air filtered by a filter is discharged outside the vacuum cleaner after circulating successively inside a housing 9, namely, through the impeller 5, a diffuser 6, a coil 7, and an exhaust hole 9a.

The efficiency of a vacuum cleaner is generally measured by vacuum pressure, namely, the suction force generated by the motor 1. Suction force is a very important element of a vacuum cleaner. Many vacuum cleaner manufacturers seek to improve the suction force of a vacuum cleaner. The basic method used to improve the suction force of a vacuum cleaner is to increase the rotation speed of the motor, although there are slight differences according to types of motors and structures of impellers.

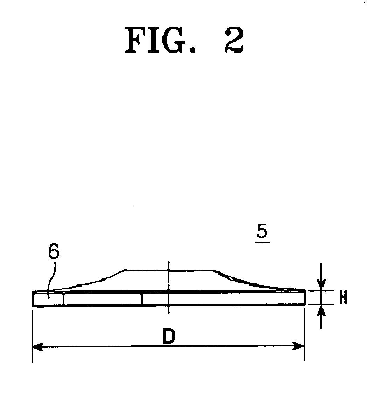

As shown in FIG. 2, the overall vacuum pressure of a vacuum cleaner can be increased by adjusting the outer diameter D of the impeller 5 or the height H of the discharge unit 6 of the impeller 5, in addition to increasing the rotation speed of the motor 1.

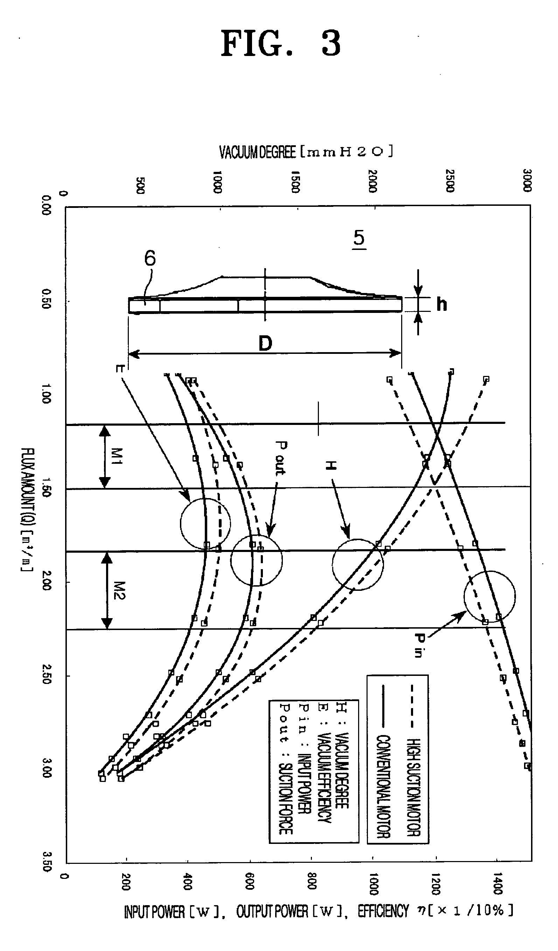

The efficiency difference between a conventional cleaner motor (26,000 to 33,000 RPM, outer diameter of impeller: 108 to 137mm) and a high suction cleaner motor (35,000 to 40,000 RPM, outer diameter of impeller: 95 to 87mm) will now be explained with reference to FIG. 3. M1 denotes the range in which the vacuum cleaner can deliver the maximum performance, and M2 indicates the range in which the cleaner motor can achieve the maximum performance.

As shown in FIG. 3, both the high suction cleaner motor and the conventional cleaner motor provide greater flux and suction force in M2 than in M1. However, the pressure loss generated by the rotating impeller 5 becomes greater in M2 as the flux amount increases, which lessens the effect of suction force (or vacuum efficiency) relatively more in M2 than in M1.

The suction force can be improved by reducing the pressure loss. To reduce the pressure loss, it is useful to increase the rotation speed of the impeller 5 and at the same time decrease the flux amount Q by reducing the diameter of the impeller 5. FIG. 3 illustrates a graph of the performance of the high suction cleaner motor that satisfies the above conditions.

As compared with the conventional cleaner motor, the high suction cleaner motor generates less pressure loss due to a decrease in the load applied to the small-sized impeller 5. However, this causes the rotation speed of the motor to increase.

Accordingly, the impeller 5 rotates at a higher speed than the preset speed. As the impeller 5 continues to rotate at a high speed, commutation becomes unstable. This can cause an increase in the number of sparks generated between a commutator 2 and a carbon brush 8, and may eventually damage the motor.

The life span of the vacuum cleaner largely depends on the life span of the motor. Generally, the reduced life span of the motor leads to a shorter life span of the vacuum cleaner.

In order to solve the problems of the high suction brush motor described above, a brush device used for a vacuum cleaner motor is replaced by an electric circuit. The motor with an electric circuit, such as a BLDC (Brushless DC) motor or a single-phase SR (Switched Reluctance) motor, provides high speed rotation and strong suction force without overburdening the motor.

The BLDC motor or the single-phase SR motor can rotate at a high speed of 40,000 RPM or more. Since the BLDC motor or the single-phase SR motor does not have a brush, the motor is immune to damage, such as the damage caused by sparks during high speed rotation. Accordingly, the motor becomes more stable, and the life span of the vacuum cleaner can be extended.

However, the BLDC motor or the single-phase SR motor is not used widely for vacuum cleaners due to its high price. The high price of the motor in turn leads to a high price of the vacuum cleaner, and the high price of the vacuum cleaner lowers its price competitiveness.

### SUMMARY OF THE INVENTION

Accordingly, it is an object of the present invention to provide a vacuum cleaner with a brush motor using a deceleration rate, which can produce improved suction force by rotating an impeller at a high speed and stabilizing the motor by setting the rotation speed of the impeller higher than that of the motor.

To that end, a non-limiting aspect of the invention provides a vacuum cleaner, including: a main body; a suction brush configured to draw particulates into the main body; a motor installed at the main body; and a deceleration unit configured to connect a driving shaft of the motor with an impeller to transfer a rotation force of the driving shaft to the impeller and to set a rotation speed of the driving shaft lower than that of the impeller.

Another non-limiting aspect provides a deceleration unit for a vacuum cleaner, including: a first gear adapted to be connected to a first end of a driving shaft of a motor; a second gear having a smaller diameter than the first gear and configured to engage the first gear; a rotation shaft configured to be connected to an impeller, wherein the second gear is adapted to be connected to a center of the rotation shaft.

Yet another non-limiting aspect provides a deceleration unit for a vacuum cleaner, including: a first pulley; a second pulley; a driving belt configured to connect the first pulley to the second pulley to transfer a driving force from the first pulley to the second pulley; and a rotation shaft configured to be connected to the second pulley and to an impeller.

The invention also provides a vacuum cleaner, including: at least one motor including at least one driving shaft; at least one impeller; and means for setting a rotation speed of the at least one shaft lower than a rotation speed of the at least one impeller.

Another object of the present invention is to provide a vacuum cleaner that is competitive in terms of price by employing a low-priced brush motor that uses a deceleration rate.

### BRIEF DESCRIPTION OF THE DRAWINGS

The above aspects and features of the present invention will be more apparent by describing certain embodiments of the present invention with reference to the accompanying drawings, in which:

FIG. 1 is a perspective view that illustrates a brush motor of a conventional vacuum cleaner.

FIG. 2 is a side view that illustrates an impeller of FIG. 1.

FIG. 3 is a graph that shows the vacuum efficiencies of a conventional cleaner motor and a high suction cleaner motor used in the conventional vacuum cleaner.

FIG. 4 illustrates a vacuum cleaner with a brush motor using a deceleration rate in accordance with a first non-limiting embodiment of the present invention.

FIG. 5 illustrates the brush motor of the vacuum cleaner using the deceleration rate in accordance with the first non-limiting embodiment of the present invention.

FIG. 6 illustrates a brush motor of a vacuum cleaner using a deceleration rate in accordance with a second non-limiting embodiment of the present invention.

### DETAILED DESCRIPTION OF THE EMBODIMENTS

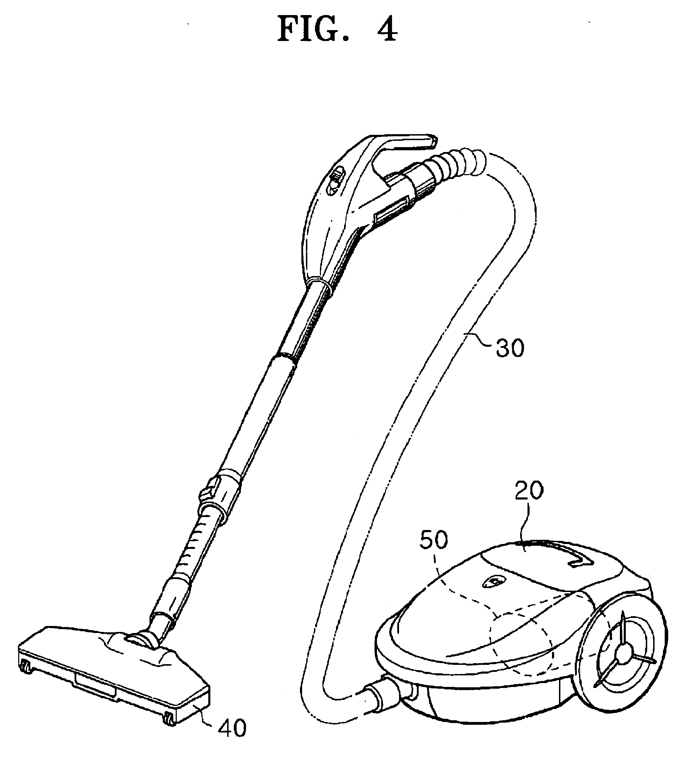

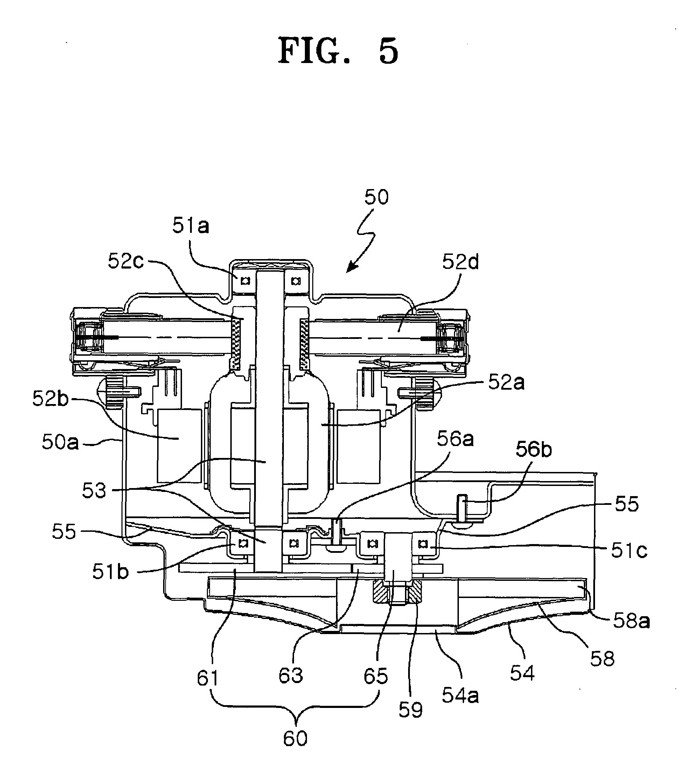

A brush motor of a vacuum cleaner using a deceleration rate in accordance with the first non-limiting embodiment of the present invention will now be described in detail with reference to the accompanying drawings. FIG. 4 is a schematic perspective view of a non-limiting example of a vacuum cleaner with a brush motor using a deceleration rate in accordance with the first embodiment. FIG. 5 is a schematic cross-sectional view that illustrates a non-limiting example of the brush motor of the vacuum cleaner using the deceleration rate.

According to the first embodiment of the present invention, the vacuum cleaner with the brush motor using the deceleration rate may include a cleaner main body 20, a flexible hose 30, a suction brush 40, and a motor 50 positioned at the main body 20.

As illustrated in FIG. 5, the vacuum cleaner may include a decelerating unit 60 that connects a driving shaft 53 of the motor 50 with an impeller 58 to transfer the rotation force of the driving shaft 53 to the impeller 58 and to set the rotation speed of the driving shaft 53 lower than that of the impeller 58. Although FIG. 4 in this embodiment illustrates one type of vacuum cleaner, the present invention can be applied to all types of vacuum cleaners including upright vacuum cleaners and canister vacuum cleaners.

The decelerating unit 60 may include a first gear 61 that may be connected to one end of the driving shaft 53, and a second gear 63 configured to engage with the first gear 61 and which may have a smaller diameter than the first gear 61. The first and second gears 61 and 63 can be spur gears or helical gears, as non-limiting examples.

The diameter of the first gear 61 may be larger than that of the second gear 63. This allows the motor 50 to rotate at a lower speed and the impeller 58 to rotate at a higher speed relative to each other. The rotation speeds of the motor 50 and the impeller 58 may be determined by the decelerating rate set between the first and second gears 61 and 63.

By way of explanation, if the rotation speed of the first gear 61 is 20,000 RPM and the decelerating rate between the first gear 61 and the second gear 63 is 0.5, the second gear 63 rotates at 40,000 RPM, and the impeller 58 subsequently rotates at double the speed of the motor. The motor 50 may rotate at a lower speed than a conventional motor, which can prevent sparks generated between commutator 52c and carbon brush 52d. As a result, the motor 50 is less susceptible to damage caused by sparks or high temperature. Preferably, the outer diameter D and the height H of the discharge unit 58a of impeller 58 in motor 50 are set smaller than those of the impeller used in a conventional vacuum motor (in view of high speed rotation) to reduce the load of the impeller 58 while maintaining the rotation speed of the motor 50.

After the motor 50 is stabilized by the decelerating unit 60, high cleaning efficiency can be obtained from the increased vacuum pressure of the vacuum cleaner. The increased pressure may be produced by the increased rotation speed of impeller 58 and reduced size of the impeller 58.

The second gear 63 may be connected to a rotation shaft 65 that passes through the center of the second gear. The impeller 58 may be connected to one end of the rotation shaft 65 with a fastener, such as nut 59.

Here, the driving shaft 53 and the rotation shaft 65 may be rotatably supported on a support panel 55 which may be mounted inside housing 50a with fasteners, such as fixing bolts 56a and 56b. As depicted in FIG. 5, bearings 51b and 51c may be installed between the driving shaft 53 and the support panel 55, a well as between rotation shaft 65 and support panel 55, respectively. In addition, the other end of the driving shaft 53 may be rotatably supported by bearing 51a which may be installed inside housing 50a.

Also, an impeller cover 54 configured to cover the impeller 58 may have an air inflow hole 54a to guide the air into the housing 50a and may be connected to the lower portion of the housing 50a. For reference, reference numerals 52a and 52b denote an armature and a coil, respectively.

The vacuum cleaner in accordance with the first non-limiting embodiment of the present invention will now be explained in detail focusing on the operation of the motor with the decelerating unit. When power is supplied to the vacuum cleaner, as shown in FIG. 5, it generates rotation force in the armature 52a and causes the driving shaft 53 to rotate.

At the same time, the first gear 61 connected to the driving shaft 53 rotates, and the second gear 63, engaged with the first gear 61, rotates around the rotation shaft 65. The rotation force of the driving shaft 53 may be transferred successively to the first gear 61, to the second gear 63, to the rotation shaft 65 and finally to the impeller 58.

Here, the diameter of the first gear 61 may be larger than that of the second gear 63. This allows the motor 50 to rotate at a lower speed and the impeller 58 to rotate at a higher speed relative to each other. The rotation speeds of the motor 50 and the impeller 58 may be determined by the decelerating rate set between the first and second gears 61 and 63.

Since the motor 50 may rotate at a low rotation speed, it can prevent sparks from generating between the commutator 52c and the carbon brush 52d. Also, cleaning efficiency can be maximized due to increased vacuum pressure between the suction brush 40 of the vacuum cleaner and the surface to be cleaned. This pressure may be achieved without overburdening the motor by setting the outer diameter D and the height H of the discharge unit 58a of the impeller 58 in the motor 50 smaller than those of the impeller used in a conventional vacuum motor.

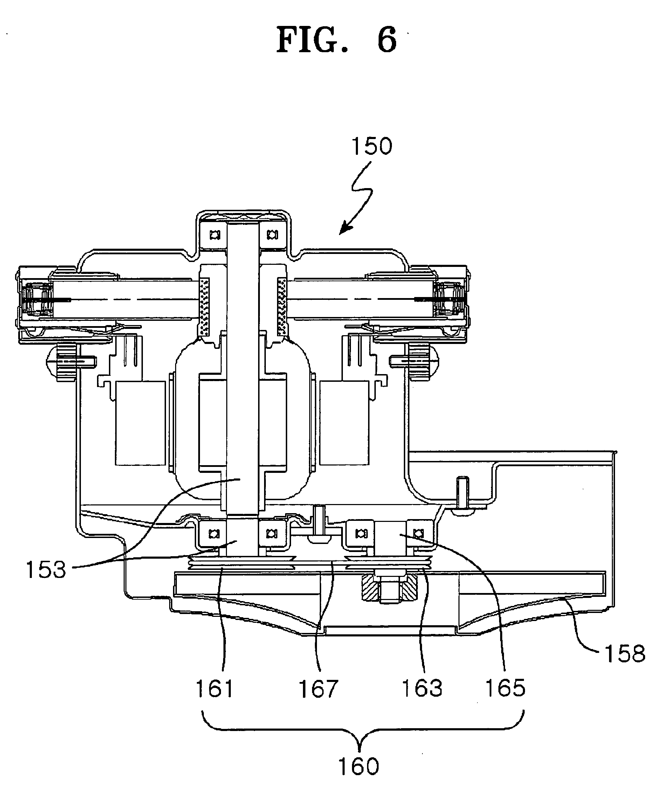

FIG. 6 is a schematic cross-sectional view that illustrates a brush motor using a deceleration rate of a vacuum cleaner in accordance with a second non-limiting embodiment of the present invention. The overall configuration of the motor 150 in the second embodiment may be the same or similar to that of the motor 50 in the first non-limiting embodiment. However, in the second non-limiting embodiment a decelerating unit 160 may be used to accelerate impeller 158.

The decelerating unit 160 may include a first pulley 161 that may be connected to one end of a driving shaft 153 of the motor 150, a second pulley 163 that may have center connected to a rotation shaft 165 passing through the second pulley 163. The second pulley may have a smaller diameter than the first pulley 161. The decelerating until may further include driving belt 167 configured to connect the first and second pulleys 161 and 163 to transfer the rotation force of the first pulley 161 to the second pulley 163.

Here, the diameter of the first pulley 161 may be larger than that of the second pulley 163, which causes the impeller 158 to rotate at a higher speed as in the first embodiment. Setting the rotation speed of the motor 150 lower than that of the impeller 158 protects the motor 150 from overworking and as a result, prevents the life span of the motor 150 from being shortened.

In the second embodiment, as in the first embodiment, the size of the impeller 158 may be set smaller than that of the impeller of a conventional cleaner motor. This reduces the flux amount of air sucked into the motor 150 and increases overall vacuum pressure in the vacuum cleaner.

The application of the decelerating unit used in the first and second embodiments of the present invention is not restricted to a brush motor but can be applied to a BLDC motor or a single phase SR motor, as other non-limiting examples. Other motors known to those of skill in the art are also within the scope of the present invention.

If the deceleration structure is applied to a BLDC motor or a single phase SR motor, the life span of the motor can be extended over time, since the rotation speed of the motor may be lowered while the impeller rotates at a high speed.

According to the present invention, the vacuum cleaner may use an economical brush motor using the deceleration rate that can stabilize the motor by lowering the rotation speed of the motor while simultaneously improving the suction force, instead of a high-priced BLDC motor or single phase SR motor. As a result, the vacuum cleaner can achieve high price competitiveness due to low manufacturing cost while having a longer life span.

Also, an increase in the size of the vacuum cleaner with the addition of the decelerating unit can be offset by minimizing the size of the impeller. As a result, the vacuum cleaner can be built in compact size and have high commercial value.

The foregoing embodiments and advantages are merely exemplary and are not to be construed as limiting the present invention. The present teachings can be readily applied to other types of devices. Also, the description of the embodiments of the present invention is intended to be illustrative and not to limit the scope of the claims. Many alternatives, modifications, and variations will be apparent to those skilled in the art.

## Claims

1. A vacuum cleaner, comprising:
a main body (20) ;
a suction brush (40) configured to draw particulates into the main body;
a motor (50 ; 150) installed at the main body; and
a deceleration unit (60 ; 160) configured to connect a driving shaft (53 ; 153) of the motor with an impeller (58 ; 158) to transfer a rotation force of the driving shaft to the impeller and to set a rotation speed of the driving shaft lower than that of the impeller.

2. The vacuum cleaner as claimed in claim 1, wherein the deceleration unit (60) comprises:
a first gear (61) adapted to be connected to a first end of the driving shaft (53) ;
a second gear (63) configured to engage the first gear and having a smaller diameter than the first gear; and
a rotation shaft (65) adapted to have a first end connected to a center of the impeller
(58), wherein a center of the rotation shaft is adapted to be connected to the second gear.

3. The vacuum cleaner as claimed in claim 2, wherein the first (61) and second (63) gears include at least one of a spur gear and a helical gear.

4. The vacuum cleaner as claimed in claim 1, wherein the deceleration unit (160) comprises:
a first pulley (161) positioned at an outer circumference of one end of the driving shaft (153) of the motor (150) ;
a second pulley (163) that has a smaller diameter than the first pulley;
a driving belt (167) that connects the first pulley with the second pulley to transfer the rotation driving force of the first pulley to the second pulley; and
a rotation shaft (165) that has a first end connected to the center of the impeller (158) and a center connected to the second pulley by passing through the second pulley.

5. A deceleration unit (60) for a vacuum cleaner, comprising:
a first gear (61) adapted to be connected to a first end of a driving shaft (53) of a motor (50) ;
a second gear (63) having a smaller diameter than the first gear and configured to engage the first gear;
a rotation shaft (65) configured to be connected to an impeller (58),
wherein the second gear is adapted to be connected to a center of the rotation shaft.

6. The deceleration unit as claimed in claim 5, wherein the first gear (61) includes at least one of a spur gear and a helical gear.

7. The deceleration unit as claimed in claim 6, wherein the second gear (63) includes at least one of a spur gear and a helical gear.

8. The deceleration unit as claimed in claim 5, wherein the second gear (63) includes at least one of a spur gear and a helical gear.

9. A deceleration unit (160) for a vacuum cleaner, comprising:
a first pulley (161);
a second pulley (163);
a driving belt (167) configured to connect the first pulley to the second pulley to transfer a driving force from the first pulley to the second pulley; and
a rotation shaft (165) configured to be connected to the second pulley and to an impeller (158).

10. The deceleration unit as claimed in claim 9, wherein the second pulley (163) has a smaller diameter than the first pulley (161).

11. A vacuum cleaner, comprising:
at least one motor (50 ; 150) including at least one driving shaft (53 ; 153) ;
at least one impeller (58 ; 158) ; and
means (60 ; 160) for setting a rotation speed of the at least one shaft lower than a rotation speed of the at least one impeller.
